# EUROPÄISCHE PATENTSCHRIFT

(11) **EP 2 862 971 B1**
(45) Veröffentlichungstag und Bekanntmachung des Hinweises auf die Patenterteilung: **28.12.2016**
(21) Anmeldenummer: 13188616.0
(22) Anmeldetag: 15.10.2013
(51) Int. Cl.: D04H 3/04, B29C 70/38, B29C 70/54, D04H 3/08, D04H 3/12, D04H 13/00, B29C 70/08, B29B 11/16, B29B 15/08, B29C 70/20

(54) **WERKSTOFF**
MATERIAL
MATÉRIAU

(43) Veröffentlichungstag der Anmeldung: 22.04.2015
(73) Patentinhaber: Siemens Aktiengesellschaft, 80333 München (DE)
(72) Erfinder: Fokken, Mike, 91056 Erlangen (DE); Oberndorfer, Klaus, 91056 Erlangen (DE)

(56) Entgegenhaltungen:
- DE-A1- 10 301 646
- US-A- 6 027 786

## Beschreibung

Die Erfindung betrifft einen Werkstoff, einen mehrschichtigen Werkstoff, sowie ein Verfahren zur Herstellung eines solchen Werkstoffs und ein Verfahren zur Herstellung eines solchen mehrschichtigen Werkstoffs. Weiter betrifft die Erfindung ein Formteil aus einem solchen Werkstoff oder aus einem solchen mehrschichtigen Werkstoff sowie ein Verfahren zur Herstellung eines solchen Formteils. Weiter betrifft die Erfindung ein Gehäuse mit einem solchen Formteil, insbesondere ein Gehäuse einer elektrischen Maschine.

Werkstoffe, insbesondere Faserverbundwerkstoffe, die aus Fasern bestehen, die in einer Matrix eingebettet sind, werden in vielen Bereichen des täglichen Lebens eingesetzt. Aufgrund ihrer hohen Festigkeit und ihrer geringen Dichte eignen sich Faserverbundwerkstoffe besonders für den Einsatz im Leichtbau, beispielsweise für Fahrräder, (Luft-) Fahrzeuge und im Anlagenbau.

Ein besonderes Augenmerk liegt seit langem auf Werkstoffen, insbesondere Faserverbundwerkstoffen, bei denen die Fasern unidirektional angeordnet sind. Je nach Länge der Fasern weist ein solcher Werkstoff unterschiedliche Eigenschaften auf. Hierbei wird zwischen kurzen Fasern, langen Fasern und Endlosfasern unterschieden. Besonders vorteilhaft für viele Anwendungen ist ein Werkstoff, wobei der Werkstoff mittellange, unidirektional angeordnete Fasern aufweist.

DE 10 2007 012 608 B4 beschreibt ein Verfahren zur Herstellung einer kraftflussgerechten Faserverbundstruktur, wobei Faserbandstücke mittels einer Legevorrichtung an einer vordefinierten Position platziert werden und danach die Faserverbundstücke mit einem Bindematerial fixiert werden.

US 6,027,786 beschreibt ein Verfahren, bei dem mit Hilfe von Lasertechnik ein Faserverbundwerkstoff perforiert wird.

DE 10301646 A1 offenbart ein Faden- oder Fasergelege, wobei mehrere Fadenstränge oder Faserstränge zum Teil kreuzend aufeinander befestigt sind und so einen Werkstoff bilden. Durch die Anordnung der Fasern wird die Festigkeit des Werkstoffs erhöht.

Nachteilig an dem Verfahren gemäß dem Stand der Technik ist das aufwendige Herstellungsverfahren einer solchen kraftflussgerechten Faserverbundstruktur.

Daher ist es Aufgabe der Erfindung, einen zeitweise verformbaren Werkstoff hoher Festigkeit bereitzustellen.

Die Aufgabe wird durch einen Werkstoff gemäß Anspruch 1 sowie durch einen mehrschichtigen Werkstoff gemäß Anspruch 14 gelöst.

Weiter wird die Aufgabe durch ein Verfahren zur Herstellung eines solchen Werkstoffes gemäß Anspruch 10 sowie eines solchen mehrschichtigen Werkstoffes gemäß Anspruch 11 gelöst.

Weiter wird die Aufgabe durch ein Formteil gemäß Anspruch 18 und einem Verfahren zur Herstellung eines solchen Formteils gemäß Anspruch 15 gelöst.

Weiter wird die Aufgabe durch ein Gehäuse gemäß Anspruch 19 gelöst.

Die weiteren Ansprüche stellen vorteilhafte Ausgestaltungen der oben genannten Werkstoffe, Formteile und der Verfahren zur Herstellung derselben dar.

Als Faserverbundwerkstoff dient vorteilhaft ein Halbzeug. Folienartige Halbzeuge aus einem Faserverbundwerkstoff werden gelegentlich auch als Prepreg (preimpreganted fibers) bezeichnet. Solche Halbzeuge bestehen meist aus Endlosfasern, insbesondere aus unidirektional angeordneten Kohlefasern, die in eine Matrix eingebettet worden sind. Die Matrix besteht dabei meist aus einem Thermoplast, insbesondere ein Hochtemperaturthermoplast, einem Duroplast und/oder ein Harz. Handelsübliche Formen solcher Halbzeuge sind Folien oder Bänder. Die Bearbeitung solcher Halbzeuge wird zuweilen auch als "Prepreg-Technologie" bezeichnet.

Besonders vorteilhaft für die Bearbeitung von Faserverbundwerkstoffen sind unidirektional angeordnete Fasern, wobei die Fasern eine Länge von einigen Zentimetern aufweisen. Die Länge der Fasern wird vorteilhaft mittels Durchtrennung der Fasern erreicht.

Eine Durchtrennung einzelner Fasern erfolgt vorteilhaft durch ein mechanisches Einwirken. Das mechanische Einwirken erfolgt vorteilhaft durch ein Schneidemesser, wobei das Schneidemesser die mindestens eine Faser durchtrennt.

Als Fasern sind besonders unidirektional angeordnete Endlosfasern geeignet. Unidirektional angeordnete Endlosfasern in einem Thermoplast, einem Harz und/oder einem Hochtemperaturthermoplast bilden die einzelnen Schichten des Werkstoffes.

Vorteilhaft werden bereits vor der Einbettung der Fasern in die Matrix mittels einer mechanischen Einwirkung einzelne Fasern durchtrennt, insbesondere gebrochen. Besonders vorteilhaft werden die Fasern dabei in einer Ebene nebeneinander angeordnet, teilweise mit einem Schneidewerkzeug durchtrennt und anschließend in die Matrix eingebettet. Damit die Fasern in der Ebene beieinander angeordnet bleiben, können die Fasern schon mit einer Verbindungsubstanz aneinander verhaftet sein. Die Verbindungssubstanz bewirkt dabei einen mehr oder weniger lockeren Zusammenhalt der Fasern untereinander. Als Verbindungssubstanz dient beispielsweise ein Harz.

Bei einem besonders vorteilhaften Vorgehen werden durch das mechanische Einwirken auf die mindesten eine Fasern etwa die Hälfte der Fasern durchtrennt und in einem Abstand von einigen Zentimeter die andere Hälfte der Fasern durchtrennt. Dieses Vorgehen wiederholt sich periodisch, insbesondere falls die mechanische Einwirkung mittels zweier rotierender Rollen erfolgt, zwischen denen die Faser verläuft und wobei eine der Rolle das mindestens eine Schneidewerkzeug aufweist und die andere Rolle an der entsprechenden Stelle mindestens eine, dem Schneidewerkzeug entsprechende, Aussparung aufweist.

Die Durchtrennung der mindestens einen Faser erfolgt vorteilhaft in einem Abstand, insbesondere in einem regelmäßigen Abstand. Vorteilhaft sind dabei auch mehrere, einander benachbarte Fasern an einer ähnlichen Stelle durchtrennt. Unter einer Durchtrennung versteht man beispielsweise eine Durchbrechung, oder ein Durchschneiden. Die Durchtrennung durch die mechanische Einwirkung erfolgt besonders vorteilhaft in dem Stadium, indem die einzelnen Fasern nebeneinander positioniert vorliegen. Die Durchtrennung der mindestens einen Faser kann entweder vor und/oder nach der Einbettung der Fasern in die Matrix erfolgen.

Besonders vorteilhaft wird bei einem Durchtrennen der Faser und dem anschließenden Einbetten der Fasern in die Matrix keine Aussparung der Matrix erzeugt. So entsteht keine Aussparung, die sich nachteilig auf die Festigkeit, die Steifigkeit und/oder die Bearbeitbarkeit auswirkt. Gegebenenfalls kann die mindestens eine Faser, die von Matrix oder Verbindungssubstanz umgeben ist, nach dem mechanischen Einwirken und/oder nach dem Einbringen von Aussparungen mit einer Matrix beaufschlagt werden. So werden vorteilhaft gegebenenfalls auftretende Aussparungen in der Schicht des Werkstoffes mit Matrix ausgefüllt und die Stabilität des Werkstoffes vorteilhaft erhöht.

Eine Durchtrennung der Fasern kann auch durch Aussparungen in der mindestens einen Schicht erfolgen. Durch eine Aussparung werden Hohlräume in der Schicht erzeugt, wobei die Hohlräume wieder mit einer Füllsubstanz wie Matrix, Klebstoff oder einem Harz aufgefüllt sein können.

Vorteilhaft werden einzelne Schichten oder mehrere Schichten, wobei die Schichten übereinander ausgeordnet sind, mit Aussparungen versehen. Das Zuführen von Aussparungen wird auch als Perforierung bezeichnet.

In einer weiteren vorteilhaften Ausgestaltung des Werkstoffes ist die mindestens eine Faser mittels mindestens einer Aussparung durchtrennt.

Aussparungen sind hier definiert als räumliche Freihaltungen, also räumliche Bereiche im Werkstoff, bei denen der Werkstoff entfernt wurde. Eine Aussparung ist also beispielhaft eine Vertiefung, ein Loch, ein Ausschnitt oder eine Kerbe. Hier wird vorteilhaft durch eine Aussparung dergestalt in mindestens eine der Schichten eingebracht, dass mindestens eine der Fasern durch die Aussparung durchtrennt wird. Die Aussparungen werden entweder in eine Schicht oder in mehreren Schichten eingebracht, oder in oder durch alle Schichten des Faserverbundwerkstoffes oder durch alle Schichten des Werkstoffs eingebracht. Aussparungen können auch schräg zur Oberfläche eingebrachte Löcher durch einzelne Schichten oder durch den Werkstoff in seiner Gesamtheit sein.

Vorteilhaft durchtrennen die Aussparungen oder das mechanische Einwirken einzelne, insbesondere nebeneinander befindliche, Fasern des Faserverbundwerkstoffes. So werden vorteilhaft aus unidirektional angeordneten Endlosfasern in einem Halbzeug oder Werkstoff versetzt angeordnete, unidirektional verlaufende Fasern bestimmten Länge.

In einer besonders bevorzugten Ausführung wird jede Schicht aus Faserverbundwerkstoff mit Aussparungen versehen. Der Werkstoff entsteht durch ein Zusammenfügen der Schichten des Faserverbundwerkstoffes. Alternativ ist es auch besonders bevorzugt, Folien aus Faserverbundwerkstoffe herzustellen und die Aussparungen nach der Zusammenfügung in oder durch die Gesamtheit der Folien einzubringen.

Als eine vorteilhafte Anordnung der Aussparungen eignen sich beispielsweise leicht versetzt auftretende Schnitte, welche dergestalt in die mindestens eine Schicht eingebracht werden, so dass die meisten der Fasern in einem Bereich durchtrennt werden. Die Schnitte sind dabei vorteilhaft um eine Linie angeordnet, wobei die Linie ungefähr orthogonal zu dem Faserverlauf angeordnet ist. Vorteilhaft werden solche Linien in einem Abstand einiger Millimeter oder Zentimeter in paralleler Weise angeordnet.

Als Aussparungen besonders geeignet sind Löcher oder rechteckige Aussparungen, die mittels eines mechanischen Schneideverfahrens, eines Hilfe von Laserstrahlen und/oder mittels Ultraschall in die Schicht oder die Schichten eingebracht werden. Runde Aussparungen weisen vorteilhaft Durchmesser im Mikrometerbereich auf. Rechteckige Aussparungen weisen vorteilhaft Abmessungen von 1 bis 5 Millimeter in der Breite und bis zu etwa 500 Mikrometer in der Länge auf. Die Breite der Aussparung verläuft dabei senkrecht zum Faserverlauf.

In einer besonders vorteilhaften Ausführung besitzen die Fasern nach der Durchtrennung eine Länge von 5 bis 10 Zentimeter. Somit sind auch die Aussparungen in einem Abstand von etwa 5 bis 10 Zentimeter einzubringen.

Rechteckige Aussparungen weisen vorteilhaft Abstände von 10 bis 30 Millimeter entlang der Breite auf. Besonders vorteilhaft sind die rechteckigen Aussparungen nahe einer Linie angeordnet, wobei sich die rechteckigen Aussparungen entlang ihrer Länge ggf. leicht überschneiden. Die Überschneidungen erhöhen die Wahrscheinlichkeit, dass nicht ungewollt einzelne Fasern an keiner Stelle durchtrennt werden und/oder die vorgesehene Länge nach der Durchtrennung aufweisen.

Der Werkstoff weist vorteilhaft auch Schichten aus einem Lack, einem Fixierungsmittel, einer Klebeschicht, und/oder einer elastischen Schicht auf. Mittels der zusätzlichen Schicht lassen sich die Eigenschaften des Werkstoffes positiv beeinflussen, insbesondere in Bezug zur Bruchsicherheit sowie zur Sprödigkeit.

Besonders Vorteilhaft bei der Herstellung eines Werkstoffes ist es, Schichten zusammen zu fügen, bei denen eine Durchtrennung der zumindest einen Faser nicht mittels einer Aussparung sondern mittels eines mechanischen Einwirkens erfolgt ist.

Vorteilhaft sind auch verschiedene Faserverbundwerkstoffe, insbesondere Schichten aus verschiedenen Faserverbundwerkstoffen für die Zusammenfügung zu einem Werkstoff geeignet. Beispielsweise können verschiedene Matrix-Materialien und unterschiedliche Faserlängen kombiniert werden.

Bei der Verwendung von Faserverbundwerkstoffen, bei denen die Fasern unidirektional angeordnet sind, können die Schichten mit und ohne Aussparungen auch so zusammengefügt werden, dass die Fasern unterschiedlicher Schichten unter einem Winkel im Bereich von 0 Grad bis 90 Grad aufweisen.

Durch das Versehen von Aussparungen in Schichten aus Faserverbundwerkstoffen lassen sich die Vorteile von Faserverbundwerkstoffen mit unidirektional angeordneten Endlosfasern, wie die einfache und preisgünstige Herstellung mit den Vorteilen von Faserverbundwerkstoffen von unidirektional angeordneten kurzen oder mittellangen Fasern, wie die gute Verformbarkeit, miteinander kombinieren.

Ein mehrschichtiger Werkstoff weist mehrere Schichten des vorstehend ausgeführten Werkstoffes auf. Während ein solcher Werkstoff meist Fasern aufweist, die in eine Richtung verlaufen, kennzeichnet ein mehrschichtiger Werkstoff die Möglichkeit, dass einzelne Schichten aus einem solchen Werkstoff derart aufeinander zusammengefügt werden, dass die Fasern unterschiedlicher Schichten in unterschiedliche Richtungen verlaufen. Der mehrschichtige Werkstoff kann auch weitere Werkstoffe wie elastische Kunststoffschichten und/oder Klebeschichten aufweisen.

Ein solcher mehrschichtiger Werkstoff wird hergestellt, indem mindestens zwei Schichten eines vorstehend ausgeführten Werkstoffes aufeinander fixiert werden. Als Fixierungsmittel eignet sich beispielsweise eine Verklebung, ein Erwärmen und Zusammenfügen der einzelnen Werkstoffe.

Ein mehrschichtiger Werkstoff zeichnet sich insbesondere dadurch aus, dass ein mehrschichtiger Werkstoff aus mehreren Schichten des Werkstoffes besteht, wobei die Richtung der Fasern eines Werkstoffes nicht notwendig gleich sein muss. So gelten insbesondere die vorteilhaften Ausgestaltungen sowohl für den Werkstoff als auch für den mehrschichtigen Werkstoff.

Zur Herstellung des Werkstoffes werden vorteilhaft mindestens zwei Schichten aufeinander befestigt. Mindestens einer der Schichten besteht dabei aus einem Faserverbundwerkstoff. Dabei liegen die Aussparungen der einzelnen Schichten aus dem Faserverbundwerkstoff nicht notwendig direkt übereinander. Bei der Verbindung mehrere Folien erfolgt die Verbindung vorteilhaft durch ein Aufeinanderlegen der, insbesondere folienförmigen, Faserverbundwerkstoffe. Die Verbindung der Schichten erfolgt mittels Erwärmung der Schichten, so dass die Matrix schmilzt und/oder weich wird und sich dadurch verbindet. So werden mehrere Schichten aus Faserverbundwerkstoff zu einem Werkstoff, insbesondere einem Faserverbundwerkstoff. Möglich ist auch eine Verbindung der einzelnen Schichten mit einem Klebstoff, insbesondere mit einem elastischen Klebstoff.

Weiter können auch Verbindungen durch Verklebungen oder Ähnliche Methoden erreicht werden. Insbesondere eine Verbindung von Materialien mittels einer chemischen Reaktion, wobei die Matrix der einen Schicht mit einem Material der anderen Schicht eine chemische Reaktion eingeht, führt zu einer besonders festen Verbindung.

Das Formteil besteht vorteilhaft aus mindestens einer Schicht des Werkstoffes und/oder des mehrschichtigen Werkstoffes. Das Formteil kann ein Gehäuse, ein Rahmen, ein Maschinenteil wie ein Zahnrad oder ein Verbindungsglied sein. Ein solches Formteil weist ein niedriges Gewicht, ein hohe Festigkeit, eine hohe Steifigkeit bei einer gleichzeitig geringen Bruchneigung auf.

Zur Herstellung des Formteils werden vorteilhaft mehrere Schichten des Werkstoffes und/oder des mehrschichtigen Werkstoffes miteinander verbunden. Gegebenenfalls weisen die einzelnen Schichten schon Aussparungen an vorteilhaften Stellen auf. Bei einem Verfahren zur Herstellung eines solchen Formteils werden Schichten wie vorstehend beschrieben verbunden und anschließend in ihrer Form verändert, beispielsweise mit Hilfe einer Presse und/oder mit Hilfe von Wärme.

In einem weiteren Herstellungsverfahren des Formteils werden die einzelnen Schichten mit Aussparungen versehen, in die für das Formteil vorgesehene Form gebracht und anschließend mit Hilfe von Druck und/oder Wärme verbunden.

Im Anschluss an die beschriebenen Herstellungsverfahren des Formteils wird das Formteil vorteilhaft weiter verarbeitet wie beschichtet, verklebt, mit weiteren Aussparungen versehen oder in sonstiger Weise weiterverarbeitet.

Ein Gehäuse aus einem solchen Werkstoff weist den Vorteil der besonderen Leichtigkeit, hohen Festigkeit, hohen Steifigkeit und guten Chemikalienbeständigkeit und somit eine hohen Lebensdauer auf

In einer vorteilhaften Ausgestaltung ist zur Durchtrennung der mindestens einen Faser ein mechanisches Einwirken auf die Faser vorgesehen.

Unter einem mechanischen Einwirken versteht man, wie vorstehend schon ausgeführt, ein Durchbrechen oder ein Zerschneiden der Faser. Ziel der mechanischen Einwirkung auf die Faser ist das Durchtrennen der Faser. Dabei wird einzig die mindesten eine Faser ohne vorteilhaft ohne Einfluss auf die Matrix durchtrennt, das heißt, das die Matrix nicht stellenweise durchtrennt wird oder mit Aussparungen versehen wird. Besonders voreilhaft werden dazu die Fasern etwa parallel aufgespannt. Dabei verlaufen die einzelnen Fasern benachbart. Die Fasern können auch mittels eines Bindemittels, wie ein Harz, aneinander leicht fixiert sein oder bereits von Matrix umgeben sein. Die parallel verlaufenden Fasern durchlaufen vorteilhaft eine Vorrichtung, wobei die Vorrichtung zur Durchtrennung der mindesten einen Faser dient.

Die Vorrichtung weist zwei oder mehrere Rollen auf, wobei eine Rolle mindestens ein Scheidewerkzeug zur Durchtrennung der mindesten einen Faser aufweist und das vorteilhaft die Faser durch eine weitere Rolle, die an einer Stelle mindestens eine Aussparung aufweist, die Faser in ihrer Position fixiert oder zumindest in einem Bereich hält. Die Rolle und die weiterer Rolle rollen entlang der Faser, wobei die Rotationsrichtung der Rollen parallel ist. Die weitere Rolle weist an der Stelle eine Aussparung auf, an der die Rolle das Schneidewerkzeug aufweist, so dass die weitere Rolle die mindestens eine Fase zumindest während der mechanischen Einwirkung stützt und somit dafür sorgt, dass die mindestens eine Faser nicht am Scheidewerkzeug vorbei gleitet.

Mittels der Rolle wird die mindestens eine Faser im Durchrollen in einem regelmäßigen Abstand durchtrennt. Die Durchtrennung erfolgt hierbei durch Brechung und/oder durch Schneiden.

Weiter Vorteilhaft kann die Rolle durch mindestens zwei Platten erfolgen, wobei eine Platte das mindestens eine Schneidewerkzeug aufweist und eine parallele Platte eine Aussparung dergestalt aufweist, so dass das Scheidewerkzeug nicht in die Platte eindringt, falls die Platten an die Fasern geführt werden. Die mindestens eine Faser befindet sich bei der mechanischen Einwirkung zwischen den Platten, wobei die Platten zueinander bewegt werden und die mindestens eine Faser dabei durchtrennen. Danach wird die Faser weiterbewegt und die Platten werden wiederholt zur Durchtrennung der mindestens einen Faser eingesetzt.

In einer weiteren vorteilhaften Ausgestaltung des Werkstoffes weist der Faserverbundwerkstoff unidirektional angeordnete Fasern auf.

Folien aus Faserverbundwerkstoffen mit unidirektional angeordneten Fasern, insbesondere mit unidirektional angeordneten Kohlefasern, von unterschiedlichen Abmessungen sind handelsüblich. Die Schichten sind meist als Bahnen aufgerollt und daher einfach zu bearbeiten, insbesondere zuzuschneiden und/ oder mit Aussparungen zu versehen, und anschließend aufeinander zu fügen. Die unidirektionale Anordnung der Fasern erlaubt eine zielgerichtete Zusammenfügung der Schichten, so dass die Fasern der einzelnen Schichten vorteilhaft einen definierten Winkel, insbesondere Null Grad, zueinander aufweisen. Besonders vorteilhaft weisen alle oder zumindest eine Mehrheit der Schichten Fasern auf, die in dieselbe Richtung verlaufen. So ist vorteilhaft ein Einsatz nach einer vorher bekannten Belastung eines solchen Werkstoffes besonders gut möglich.

Bei einer weiteren vorteilhaften Ausgestaltung durchdringen die Aussparungen eine und/oder mehrere Schichten. Dabei sind insbesondere Schichten aus Verbundwerkstoff gemeint.

Eine Aussparung durch eine oder mehrere Schichten ist besonders einfach in der Herstellung. Aussparungen, die eine oder mehrere Schichten gleichzeitig durchdringen sind Löcher jeglicher Form. So sind die Löcher beispielsweise rund, wobei diese mit sehr einfachen Mitteln in eine oder mehrere Schichten eingebracht werden können. Vorteilhaft sind auch rechteckige Aussparungen, die mittels einer Schneidetechnik einfach durch eine oder mehrere Schichten eingebracht werden können. Zur Erstellung der Aussparungen eignen sich Schneidemethoden mit Hilfe von Laserstrahlen, mit Hilfe von Ultraschall oder durch spanhebende Bearbeitung wie Bohren.

Bei einer weiteren vorteilhaften Ausgestaltung sind die Aussparungen zur Durchtrennung mehrerer nebeneinander angeordneten Fasern des Werkstoffes vorgesehen.

Fasern, insbesondere Kohlefasern in einem Verbundwerkstoff, sind meist in einem sehr geringen Abstand zueinander angeordnet. Somit durchtrennt eine Aussparung einer Größe im Mikrometerbereich regelmäßig mehrere Fasern. Die zielgerichtete Durchtrennung mehrerer, benachbarten Fasern führt vorteilhaft zu einer Erhöhung der Biegsamkeit in dem Bereich, in dem die Durchtrennung der Fasern erfolgt ist. So ist eine einfache und zielgerichtete Modifikation des Werkstoffes möglich.

Bei einer weiteren vorteilhaften Ausgestaltung des Werkstoffes ist die Aussparung zur zumindest bereichsweisen Durchtrennung mindestens einer Schicht vorgesehen.

Eine Durchtrennung einer Schicht ist eine Aussparung, die über eine gesamte Breite einer Schicht verläuft. Unter einer teilweisen Durchtrennung versteht man eine schnittförmige Aussparung in oder durch den Werkstoff und/oder durch einzelne Schichten des Werkstoffes. Denkbar ist auch eine Aussparung, welche über eine gesamte Länge und/oder Breite der Schicht verläuft, aber die Schicht oder die Schichten nicht durchtrennt. Vollständig durchtrennte Schichten können jedoch mit auf oder zwischen weiteren Schichten eingebettet werden.

Eine bereichsweise Durchtrennung einer Schicht ist insbesondere bei kurzen Schnitten gegeben, wobei die Schnitte mit einem Schneidewerkzeug, mit Hilfe eines Laserstrahls, mit Hilfe von Ultraschall in eine oder mehrere Schichten gleichzeitig, eingebracht sind. Falls ein Schnitt die gesamte Folie in einem Bereich durchtrennt, so muss diese wieder zusammengefügt werden. Eine solche Zusammenführung erfolgt vorteilhaft mit Hilfe einer weiteren Schicht. So kann eine teilweise und/oder vollständig durchtrennte Schicht auf einer weiteren Schicht fixiert werden oder zwischen zwei weiteren Schichten fixiert werden, wobei die weiteren Schichten ihrerseits wieder zumindest teilweise durchtrennt sind und/oder weitere Aussparungen aufweisen können. Als Laserquellen sind beispielsweise gepulste Laser mit einer Pulsdauer im Sub-Nanosekunden Bereich gut geeignet.

Bereiche, die bei einer weiteren Verarbeitung des Werkstoffes besonders stark verformt werden, erhalten durch die vorstehend ausgeführten Aussparungen und Durchtrennungen vorteilhaft eine bereichsweise hohe Flexibilität.

In einer weiteren vorteilhaften Ausgestaltung des Werkstoffes weist die mindestens eine Schicht Bereiche mit einer geringen Dichte von Aussparungen sowie weitere Bereiche mit einer hohen Dichte von Aussparungen auf.

Anstelle von Aussparungen sind auch Durchtrennungen von Fasern mittels einer mechanischen Einwirkung möglich. Bei der Verformung des Werkstoffes mit Hilfe einer Formpresse sind einige Bereiche stark zu verformen. Weitere Bereiche, insbesondere flächige Bereiche, werden nicht oder nur unwesentlich verformt. So sind die flächigen Bereiche vorteilhaft in ihrer Festigkeit erhöht, falls die Schichten in diesem Bereich keine oder nur wenige Aussparungen oder Durchtrennungen der Fasern aufweisen. In Bereichen starker Verformung ist eine gute Drapierbarkeit der Schichten, insbesondere der Schichten aus Faserverbundwerkstoff, für die Fertigung von hohem Nutzen. Eine (bereichsweise) hohe Drapierbarkeit ergibt sich aus einer (bereichsweise) hohen Dichte von Aussparungen in dem Werkstoff und/oder dem mehrschichtigen Werkstoff. Durch eine hohe Dichte von Aussparungen oder Durchtrennungen der Fasern verkürzt sich die bereichsweise vorliegende durchschnittliche Faserlänge.

Die verformten Bereiche mit der höheren Dichte von Aussparungen weisen nach der Verformung geringere innere Spannungen auf, da sich bei Bedarf Fasern in ihrer Ausbreitungsrichtung verschieben können. Insbesondere bei besonders belasteten Formteilen aus einem hier beschriebenen Werkstoff weisen wenig interne Spannungen eine höhere Sicherheit gegenüber Bruch oder anderen Beschädigungen auf.

Die Dichte und auch die Art und Verteilung der Aussparungen in der mindestens einen Schicht erfolgt vorteilhaft anhand der weiteren Verarbeitung. So ist es besonders vorteilhaft, die Aussparungen sowie die Orte der Aussparungen des Werkstoffes schon bei der Planung des Formteils, welches aus dem Werkstoff hergestellt werden soll, zu beachten. Weiter vorteilhaft wird die geplante Art und Verteilung der Aussparungen an die Maschine übertragen, die das Formteil und/oder den Werkstoff herstellt.

Bei einer computergestützten Planung des Formteils ist es daher besonders vorteilhaft, den Ort und die Art der Aussparung, beispielsweise mittels eines Computerprogramms zu planen oder in die Planung mit einzubeziehen. Die Verteilung erfolgt weiter vorteilhaft anhand von den zu erwartenden Belastungen der einzelnen Bereiche des Bauteils. Denkbar ist ein Zusatzprogramm, welches anhand der Form des Formteils und ggf. der zu erwartenden Belastung die Aussparungen in die mindestens eine Schicht automatisiert einplant.

Bei einer vorteilhaften Ausgestaltung des Verfahrens werden Aussparungen nach der Verbindung der Schichten eingebracht.

Besonders vorteilhaft weisen einzelne Schichten bereits vor der Verbindung der Schichten schon Aussparungen auf und werden nach der Verbindung mit weiteren Aussparungen versehen.

Dabei wird beispielsweise der Werkstoff aus mehreren Schichten eines Faserwerkstoffes zusammengefügt. Nach der Verbindung werden vorteilhaft Aussparungen oder weitere Aussparungen mittels der vorstehend ausgeführten Methoden in die Schichten eingebracht. Durch das Einbringen von Aussparungen in den Werkstoff ist die weitere Verarbeitung des Werkstoffes vorteilhaft vereinfacht. So können einfache und kostengünstige Fertigungsmethoden zur Modifikation des Werkstoffes, insbesondere der Verformung angewandt werden.

Bei einer weiteren vorteilhaften Ausgestaltung des Verfahrens werden die Aussparungen mit Hilfe eines Laserstrahls und/oder mit Hilfe von Ultraschall aus dem mehrschichtigen Werkstoff herausgelöst.

Die Verwendung eines Laserstrahls zur Materialbearbeitung ist ein einfaches, schonendes und genaues Verfahren, Aussparungen in eine oder mehrere Schichten einzubringen. So lassen sich die Aussparungen sehr genau platzieren und das die Aussparungen umgebende Material des Werkstoffes wird vorteilhaft geschont. Laserstrahlen, insbesondere fokussierte Laserstrahlen, ermöglichen vorteilhaft eine besonders genaue Fertigung und ein besonders genaues Einbringen von Aussparungen.

Bei einer vorteilhaften Ausgestaltung des Verfahrens zur Herstellung eines Formteils wird die Verteilung der Aussparungen anhand der Verformung in dem Werkstoff oder in dem mehrschichtigen Werkstoff gewählt.

Die Verformung des zunächst eine geringe Krümmung aufweisenden Werkstoffes oder des mehrschichtigen Werkstoffes erfolgt vorteilhaft mechanisch, insbesondere durch einen Tiefziehprozess. In Bereichen starker Verformung ist daher eine hohe Drapierbarkeit des Werkstoffes und/oder des mehrschichtigen Werkstoffes besonders vorteilhaft. Die Drapierbarkeit kann durch gezielt positionierte Aussparungen in dem zu verformenden Bereich erhöht werden. Daher wird vorteilhaft die Position, die Form und die Tiefe der Aussparungen anhand der anschließenden Verformung während der Planungsphase geplant und vor der Verformung des Werkstoffes in den Werkstoff eingebracht. So kann eine hohe Drapierbarkeit während der Herstellung des Formteils erreicht werden und weiter vorteilhaft kann derart eine die Bruchfestigkeit des Formteils erhöht werden.

Bei einer weiteren vorteilhaften Ausgestaltung des Verfahrens zur Herstellung des Formteils erhalten Bereiche, die stark verformt werden, mehr Aussparungen als Bereiche, die schwach verformt werden.

Insbesondere Bereiche, die stark verformt werden, bedürfen während der Herstellung einer erhöhten Drapierbarkeit. Eine Erhöhung der Dichte der Aussparungen vermindert die lokale Länge der Fasern und erhöht die Drapierbarkeit des Werkstoffes. Eine hohe Drapierbarkeit des Werkstoffes in Bereichen, die stark verformt werden, vermindert die Neigung zum Bruch.

Im Folgenden wird die Erfindung anhand der in den Figuren dargestellten Ausführungsbeispiele näher beschrieben und erläutert. Es zeigen:
- FIG 1: eine Draufsicht auf eine Schicht des Werkstoffes,
- FIG 2: unterschiedliche Formen und Anordnungen von Aussparungen,
- FIG 3: eine besonders vorteilhafte Anordnung von Aussparungen,
- FIG 4: eine Seitenansicht auf mehrere Schichten eines Werkstoffes,
- FIG 5: eine weitere Seitenansicht,
- FIG 6: eine Schema des Werkstoffes,
- FIG 7: ein Formteil, sowie
- FIG 8: eine mechanische Einwirkung auf eine Faser.

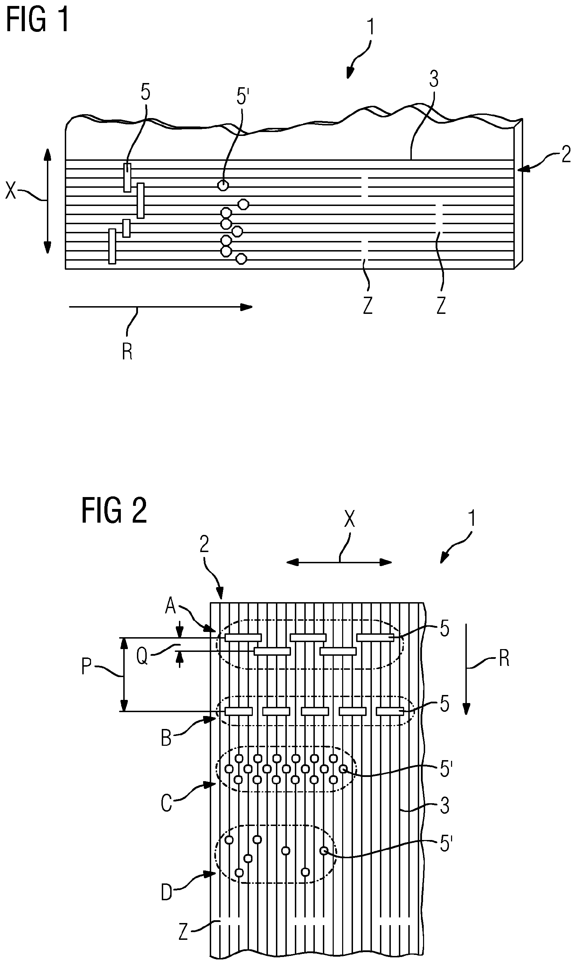

FIG 1 zeigt eine Draufsicht auf eine Schicht 2 des Werkstoffes 1. Der Werkstoff 1 ist beispielsweise ein Ausschnitt eines Halbzeuges. Als Halbzeug dient hierbei vorteilhaft eine Folie. Der Werkstoff besteht aus einzelnen Fasern 3, die unidirektional verlaufen, d.h. parallel zueinander angeordnet sind. Der Pfeil R symbolisiert die Richtung der Faser des Werkstoffes 1 bzw. des Faserverbundwerkstoffes 1. Orthogonal zur Faser 3 sind Aussparungen 5 gezeigt, wobei Aussparungen 5 jeweils eine Faser 3 oder mehrere Fasern 3 durchtrennen. Die Fasern 3 werden durch eine Matrix 16 zusammengehalten. Die Matrix 16 besteht regelmäßig aus einem Kunststoff oder aus einem Harz. Die Matrix 16 dient zur Aufrechterhaltung der Struktur der Fasern 3. Die Matrix 16 dient weiter zur Befestigung der Fasern 3 in ihrer Umgebung und zur vereinfachten Handhabe der Schicht 2. Nahe der linken Seite des Werkstoffes 1, bzw. der Schicht 2, sind rechteckige Aussparungen 5 gezeichnet. Die rechteckigen Aussparungen 5 weisen fertigungsbedingt abgerundete Ecken auf. Rechteckige Aussparungen 5 werden auch als Schnitte bezeichnet. Die rechteckigen Aussparungen 5 durchtrennen jeweils eine Vielzahl von Fasern 3. Die rechteckigen Aussparungen 5 sind so angeordnet, dass einige der benachbarten Aussparungen 5 jeweils dieselbe Faser 3 mehrfach durchtrennen. Der Abstand zwischen den rechteckigen Aussparungen 5 ist gering im Verhältnis zum Abstand der weiteren Aussparungen 5', hier als kreisrunde weitere Aussparungen 5' gezeigt. Ein gemittelter Abstand zwischen Aussparungen 5, 5', die zur Durchtrennung einer Faser 3 diesen, wird als mittlere Länge der Faser 3 bezeichnet. Die Fasern weisen weiter Durchtrennungen Z auf, wobei die Durchtrennungen Z vorteilhaft einen Teil der Fasern in regelmäßigen Abständen durchtrennen. Die Durchtrennungen Z der Faser 3 werden vorteilhaft durch eine mechanische Einwirkung auf die Faser 3 erzeugt.

Der Werkstoff 1 besteht vorteilhaft aus mehreren solcher Schichten 2, wobei die Aussparungen 5, 5' durch eine Schicht 2 oder mehrere Schichten 2 hindurch gehen. Die weiteren Aussparungen 5' durchtrennen auch zumindest eine Faser 3, wobei je nach Dichte der Fasern 3 des Faserverbundwerkstoffs auch eine mehrere verschiedenen Fasern 3 durch die weiteren Aussparungen 5' durchtrennt sein können. Die Durchtrennung einer einzigen Faser 3 ist daher nur symbolisch zu verstehen. Die rechteckigen Aussparungen 5 dagegen durchtrennen demgegenüber eine Vielzahl einzelner Fasern 3, insbesondere benachbart verlaufende Fasern 3.

FIG 2 zeigt unterschiedliche Formen und Anordnungen von Aussparungen 5, 5' entlang einer Draufsicht auf den Werkstoff.

Die Aussparungen 5, 5' sind dabei in Gruppen A, B, C, D von Aussparungen 5 zusammengefasst. Die Gruppen A, B, C, D von Aussparungen überdecken dabei begrenzte Bereiche des Werkstoffes 1. Eine erste Gruppe A von Aussparungen 5 zeigt rechteckige Aussparungen 5, welche orthogonal zur Richtung der Fasern 3 in einem geringen Abstand Q zueinander versetzt sind. Die Aussparungen 5 liegen entlang ihrer Längsrichtung entlang zwei, mit einem geringen Abstand Q zueinander befindlichen gedachten Linien. Die Aussparungen 5 sind in Längsrichtung jeweils zueinander geringfügig versetzt. Einzelne Aussparungen 5 überlappen in ihrer Längsrichtung zueinander, so dass einige Fasern 3 von schräg gegenüberliegenden, einander versetzt liegenden Aussparungen 5 gegebenenfalls durchtrennt werden. Eine solche erste Gruppe A von Aussparungen 5 ist eine besonders bevorzugte Anordnung für einen mehrschichtigen Werkstoff 1. In der Figur darunter angeordnet befindet sich eine weitere Gruppe B von Aussparungen 5, wobei die Aussparungen 5 rechteckig sind, auf eine Linie orthogonal zur Richtung R des Verlaufs der Faser 3 angeordnet sind. Im Unterschied der darüber gezeichneten Gruppe A von Aussparungen 5 sind die Aussparungen 5 der Gruppe B auf einer Linie nebeneinander angeordnet, nicht überlappend angeordnet. Die Aussparungen 5 der Gruppe B sind von den Aussparungen 5 der Gruppe A mit einem mittleren Abstand P beabstandet. Die Aussparungen 5 der Gruppe B durchtrennen die Fasern 3 nicht mehrfach. In Längsrichtung sind die Aussparungen leicht beabstandet angeordnet und durchtrennen somit nicht jede der Fasern 3 des Faserverbundwerkstoffes oder des Werkstoffes.

Eine weitere Gruppe von Aussparungen C zeigt eine dichte Ansammlung von kleinen, kreisrunden Aussparungen 5', wobei die kreisrunden Aussparungen 5' zueinander versetzt nahezu alle Fasern mindestens einmal im Bereich der Gruppe der Aussparungen durchtrennen. Die weitere Gruppe von Aussparungen C weist eine hohe Dichte von Aussparungen auf.

Im unteren Bereich der Zeichnung befindet sich eine weitere Gruppe D von Aussparungen 5', wobei die Dichte der Aussparungen 5' geringer als die Dichte der Aussparungen 5' der Gruppe C ist. Durch die geringe Dichte der runden Aussparungen 5' werden nicht alle Fasern 3 in einem Bereich der Schicht 2 oder des Faserverbundwerkstoffes durchtrennt. Der Werkstoff 1 besteht vorteilhaft aus mindestens einer solcher Schicht 2, wobei die Aussparungen 5, 5' sich nicht notwendigerweise überdecken.

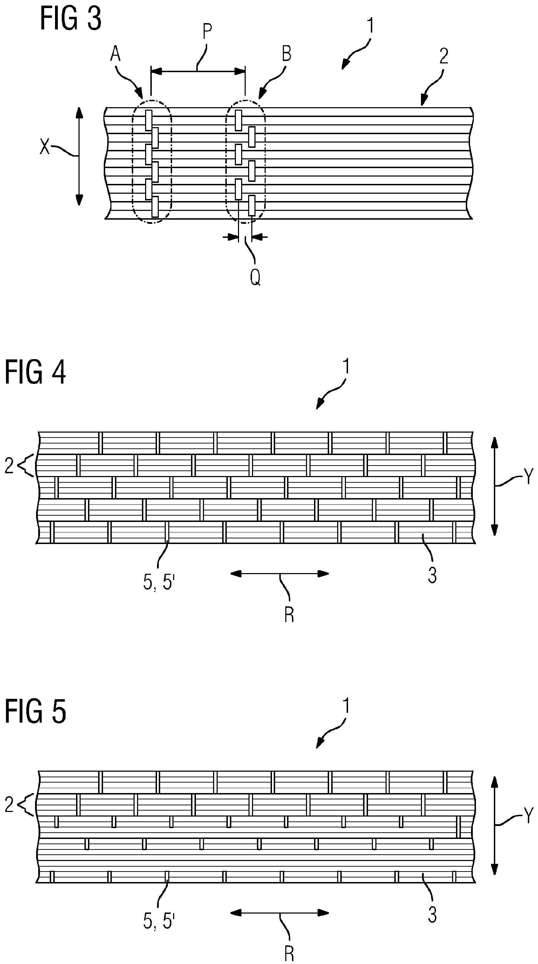

FIG 3 zeigt eine besonders vorteilhafte Anordnung von Aussparungen 5. Die Aussparungen 5 sind rechteckig, wobei die Aussparungen 5 entlang zweier Linien angeordnet sind. Die Aussparungen 5 sind jeweils einer ersten Gruppe A und einer weiteren Gruppe B zuordenbar. Die Aussparungen 5 überlappen geringfügig entlang ihrer Längsrichtung. Die Aussparungen 5 sind jeweils entlang von zwei virtuellen Linien angeordnet, wobei die beiden virtuellen Linien parallel verlaufen. Die virtuellen Linien, auf denen Aussparungen 5 lokalisiert sind, weisen einen geringen Abstand Q auf. In einem größeren Abstand P befindet sich eine weitere Gruppe B von rechteckigen Aussparungen, wobei die weitere Gruppe B der rechteckigen Aussparungen 5 der ersten Gruppe A gleicht. Der Abstand P der ersten Gruppe A von Aussparungen 5 und der weiteren Gruppe B von Aussparungen 5 beträgt vorteilhaft zwischen 10 und 50 Millimeter.

FIG 4 zeigt eine Seitenansicht auf mehrere Schichten 2 eines Werkstoffes 1. Die Schichten 2 bestehen vorteilhaft aus einem Faserverbundwerkstoff. Der Pfeil neben der Schicht 2 entspricht der Richtung R der Fasern 3. Der Werkstoff 1 besteht aus mehreren Schichten 2, beispielsweise Folien 2. Räumlich zueinander versetzt weist jede der einzelnen Schichten 2 Aussparungen 5, 5' auf, wobei die Aussparungen 5, 5' durch die einzelnen Schichten 2 hindurch verlaufen. Die Schichten 2 sind übereinander angeordnet und vorteilhaft miteinander verbunden. Der weitere Pfeil an der linken Seite symbolisiert die Höhe y des Werkstoffes 1. Eine Fixierung der Schichten 2 erfolgt vorteilhaft mittels einer Klebeverbindung oder durch Wärmeeinwirkung auf die aufeinander geordneten Schichten. Die Aussparungen 5, 5' weisen einen nahezu konstanten Abstand P auf. Die Aussparungen 5, 5' sind entweder kreisförmig oder in einer besonders bevorzugten Ausführung rechteckig. Die Aussparungen 5, 5' durchtrennen die Fasern der jeweiligen Schicht 2. Es ist auch möglich, dass die Aussparungen 5, 5' die gesamte Breite der übereinander angeordneten Schichten 2 durchlaufen und somit die Schichten 2 in ihrer Gesamtheit durchtrennen. Durch die Verbindung der einzelnen Schichten 2 erhält der Werkstoff 1 seine besonders hohe Festigkeit.

FIG 5 zeigt eine weitere Seitenansicht des Werkstoffes 1. Dabei besteht der Werkstoff 1 aus mehreren Schichten 2 (Folien) die aufeinanderliegend miteinander verbunden sind. Die oberen beiden Schichten 2 weisen Aussparungen 5, 5' im Abstand P auf, wobei die Aussparungen 5, 5' durch die gesamte Schicht 2 hindurch verlaufen. Die unteren Schichten 2 weisen Aussparungen 5, 5' auf, wobei die Aussparungen 5, 5' nur einen Teil der Fasern 3 in einer Schicht 2 durchtrennen und nicht durch die gesamte Höhe y der Schicht 3 hindurch verlaufen. Je nach Verbindungsart der einzelnen Schichten 2 untereinander entspricht die Darstellung einem Werkstoff 1 oder einem mehrschichtigen Werkstoff 1, der aus Schichten zusammengesetzt ist, wobei nicht alle der Schichten 1 Aussparungen aufweisen.

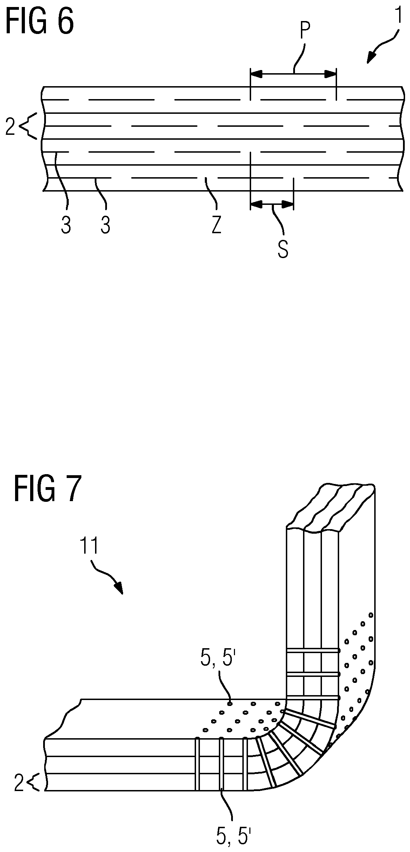

FIG 6 zeigt ein Schema des Werkstoffes 1. Der Werkstoff 1 weist Schichten 2 auf, wobei die einzelnen Schichten 2 anhand ihrer Fasern 3 symbolisiert sind. Die Fasern 3 sind durch Aussparungen 5, 5' (als Kreuze symbolisiert) in kurze Abschnitte der Länge P durchtrennt. Nach dem Zusammenfügen der Schichten 2 zum Werkstoff und/oder zu einem mehrschichtigen Werkstoff 1 befinden sich die Aussparungen 5, 5' zueinander versetzt. Dabei weisen benachbarte Aussparungen 5, 5' der einzelnen Schichten 2 einen Abstand s auf.

FIG 7 zeigt ein Formteil 11. Das Formteil 11 besteht aus einem Werkstoff 1, der aus mehreren Schichten 2 besteht, wobei die Schichten 2 aus einem Faserverbundwerkstoff bestehen. Das Formteil 11 weist einen Winkel auf. Im Bereich der Verformung um den Winkel weist das Formteil 11 Aussparungen 5, 5' auf. Die Aussparungen 5, 5' durchdringen den gesamten Werkstoff 1 oder den gesamten mehrschichtigen Werkstoff 1. Die Dichte der Aussparungen 5, 5' ist im Bereich der Verformung um den Winkel erhöht, im Vergleich zu den nicht verformten Bereichen. Vorteilhaft wird ein solches Formteil 11 aus mehreren Schichten 2 zusammengesetzt, wobei die einzelnen Schichten 2 im Bereich der nachfolgenden Verformung Aussparungen 5, 5' aufweisen. Mittels einer Presse und gleichzeitiger Einwirkung von Wärme erfolgt die Verformung des Werkstoffes 1 oder des mehrschichtigen Werkstoffes 1 in die für das Formteil 11 vorgesehene Form. Vor der Verformung können mithilfe von Schneidetechniken weitere Aussparungen 5, 5' in die Bereiche starker Verformung eingebracht werden.

Es ist anzumerken, dass die Aussparung vor und/oder nach der Bearbeitung wieder mit einem Material, insbesondere einer Matrix, zumindest teilweise wieder aufgefüllt werden kann.

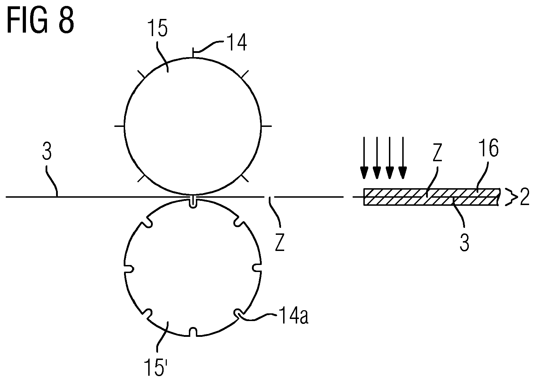

FIG 8 zeigt eine mechanische Einwirkung auf eine Faser 3. Eine Rolle 15 weist an ihrer Außenseite Scheidewerkzeuge 14 auf. Die weitere Rolle 15' weist an ihrer Außenseite Öffnungen 14a auf, welche zur Aufnahme der Schneidewerkzeuge 14 dienen, wenn die Rollen 15, 15' aneinander rotieren. Eine oder mehrere Fasern 3 werden durch die Rolle 15 von oben und durch die weitere Rolle 15' von unten beaufschlagt. Durch die Rotation der Rolle 15 wird die Faser wiederkehrend durch ein Schneidewerkzeug 14 beeinflusst. Die Faser 3 kann dem Schneidewerkzeug 14 nicht nach unten oder zu einer Seite Ausweichen, da von der unteren Seite die Ränder der Öffnung 14a der weiteren Rolle 15' entgegensteht. Durch den mechanische (Kraft-) Einwirkung des Schneidewerkzeugs 14 auf die Faser 3 wird die Faser 3, vorteilhaft in regelmäßigen Abständen, durchtrennt. Die Durchtrennung Z der zumindest einen Faser 3 erfolgt durch Brechen oder durch Schneiden der Faser 3.

Vorteilhaft laufen eine große Anzahl von Fasern 3 zwischen den Rollen 15, 15', wobei die Fasern jeweils einander benachbart unidirektional angeordnet sind. Besonders vorteilhaft sind die Fasern 3 durch ein Verbindungsmittel, wie z.B. eine Matrix 16 in ihrer Position nebeneinander fixiert, wie bei einem folienartigen Halbzeug. Anstelle der Matrix 16 können die Fasern 3 auch mit einer Verbindungsubstanz, beispielsweise einem Harz, zusammen gehalten werden. Falls die Fasern 3 bei dem Durchtrennen noch nicht von ausreichender Menge Matrix 16 umgeben worden sind, werden die Fasern 3 im Anschluss an die mechanische Einwirkung mit Matrix 16 umgeben. Die Einbettung der Faser 3 in die Matrix ist durch die nach unten gerichteten Pfeile symbolisiert. Gegebenenfalls werden die Fasern 3 oder das Halbzeug nach dem mechanischen Einwirken durch die Rollen 15, 15' zum ersten Mal oder noch einmal mit einer Matrix 16 umgeben.

Insbesondere bei der Bearbeitung von einem Halbzeug, wie einem Prepreg, entsteht mittels der Schneidewerkzeuge 14 ein Muster, welches der Darstellung der durchtrennten Fasern in FIG 6 gleicht. Mittels der Schneidwerkzeuge 14 werden insbesondere bei dem mechanischen Einwirken auf das Halbzeug rechteckige Aussparungen 5 erzeugt.

Zusammengefasst betrifft die Erfindung einen Werkstoff 1, aufweisend mindestens eine Schicht 2 aus einem Faserverbundwerkstoff, wobei eine Schicht 2 zumindest eine durchtrennte Faser 3 aufweist. Die Fasern 3 werden von einer Matrix 16 beaufschlagt. Die Faser 3 ist entweder durch Aussparungen 5, 5' oder durch mechanisches Einwirken durchtrennt. Die Fasern 3 des Werkstoffes 1 sind vorteilhaft unidirektional angeordnet. Die Aussparungen 5, 5' sind vorteilhaft rechteckig und werden mit in mindestens eine Schicht des Werkstoffes 1 oder des mehrschichtigen Werkstoffes 1 eingefügt. Eine Durchtrennung Z der zumindest einen Faser 3 kann auch mittels eines Schneidewerkzeugs 14 vor und/oder nach der Beaufschlagung der Matrix 16 erfolgen. Durch die Durchtrennung Z, welche vorteilhaft in regelmäßigen Abständen erfolgt, werden aus unidirektional angeordneten Fasern 3 einer endlosen Länge mehrere Fasern 3 einer endlichen Länge P. Dies führt zu verbesserten Eigenschaften bezüglich der Steifigkeit, der Festigkeit und der Bruchfestigkeit des Werkstoffes 1 und/oder ggf. eines aus dem Werkstoff 1 gefertigten Formteils 11. Ein solcher Werkstoff 1 ist überdies leichter drapierbar. Die Erfindung betrifft ferner ein Formteil 11 aus einem solchen Werkstoff 1 und Herstellungsverfahren für den Werkstoff 1 und für solche Formteile. Die Erfindung betrifft auch einen mehrschichtigen Werkstoff 1, wobei der mehrschichtige Werkstoff 1 aus mehreren Schichten 2 des Werkstoffes 1 besteht, die miteinander, insbesondere übereinander, fixiert sind.

## Patentansprüche

1. Werkstoff (1), aufweisend mindestens eine Schicht (2), wobei mindestens eine der Schichten (2) einen Faserverbundwerkstoff aufweist, wobei der Faserverbundwerkstoff Fasern (3) aufweist und wobei mindestens eine Faser (3) durchtrennt ist, **dadurch gekennzeichnet, dass** die mehrere nebeneinander angeordnete Fasern (3) mittels mindestens einer Aussparung (5, 5') durchtrennt sind und dass die Aussparung (5, 5') zur zumindest bereichsweisen Durchtrennung (Z) mindestens einer Schicht (3) vorgesehen ist und dass die mindestens eine Schicht (2) Bereiche mit einer geringen Dichte von Aussparungen (5, 5') aufweist sowie weitere Bereiche mit einer hohen Dichte von Aussparungen (5, 5') aufweist.

2. Werkstoff (1) nach Anspruch 1, wobei zu einer Durchtrennung (Z) der mehreren nebeneinander angeordneten Fasern (3) ein mechanisches Einwirken auf die Fasern (3) vorgesehen ist.

3. Werkstoff (1) nach einem der vorangehenden Ansprüche, wobei der Faserverbundwerkstoff unidirektional angeordnete Fasern (3) aufweist.

4. Werkstoff (1) nach einem der vorangehenden Ansprüche, wobei die Aussparungen (5, 5') eine und/oder mehrere Schichten 2 durchdringen.

5. Verfahren zur Herstellung eines Werkstoffes (1) nach einem der Ansprüche 1 bis 4, wobei mindestens eine Faser (3) aus dem Faserverbundwerkstoff mittels einer mechanischen Einwirkung durchtrennt wird.

6. Verfahren zur Herstellung eines mehrschichtigen Werkstoffes (1), wobei ein erster Werkstoff (1) gemäß einem der Ansprüche 1 bis 4 mit mindestens einem weiteren Werkstoff (1) gemäß einem der Ansprüche 1 bis 4, verbunden wird.

7. Verfahren nach Anspruch 5 oder 6, wobei die Aussparungen (5, 5') durch den Werkstoff (1) nach der Verbindung der Schichten (2) eingebracht werden.

8. Verfahren nach einem der Ansprüche 6 bis 7, wobei die Aussparungen (5, 5') mit Hilfe eines Laserstrahls und/oder mit Hilfe von Ultraschallwellen aus dem mehrschichtigen Werkstoff (1) herausgelöst werden.

9. Mehrschichtiger Werkstoff (1), hergestellt mittels eines Verfahrens gemäß der Ansprüche 6 bis 8.

10. Verfahren zur Herstellung eines Formteils (11), wobei ein Werkstoff (1) gemäß einem der Ansprüche 1 bis 4 oder ein mehrschichtiger Werkstoff (5), hergestellt gemäß Anspruch 5 oder 9 in seiner Form bereichsweise verändert wird.

11. Verfahren zur Herstellung eines Formteils (11) gemäß Anspruch 10, wobei die Verteilung der Aussparungen (5, 5') anhand der Verformung in dem Werkstoff (1) oder in dem mehrschichtigen Werkstoff (1) gewählt wird.

12. Verfahren nach Anspruch 11, wobei Bereiche, die stark verformt werden, mehr Aussparungen (5, 5') erhalten als weitere Bereiche, die schwach verformt werden.

13. Formteil (11), hergestellt mit einem Verfahren gemäß einem der Ansprüche 11 bis 12.

14. Gehäuse, insbesondere ein Gehäuse einer elektrischen Maschine, aufweisend ein Formteil (11) gemäß Anspruch 13.

## Claims

1. Material (1), having at least one layer (2), wherein at least one of the layers (2) has a fibre composite, wherein the fibre composite has fibres (3) and wherein at least one fibre (3) is cut through, **characterised in that** the multiple fibres (3) arranged adjacent to one another are cut through by means of at least one recess (5, 5') and that the recess (5, 5') is provided to cut through (Z) at least one layer (3) at least in some areas and that the at least one layer (2) has areas with a low density of recesses (5, 5') and further areas with a high density of recesses (5, 5').

2. Material (1) according to claim 1, wherein a mechanical action on the fibres (3) is provided in order to cut through (Z) the multiple fibres (3) arranged adjacent to one another.

3. Material (1) according to one of the preceding claims, wherein the fibre composite has unidirectionally arranged fibres (3).

4. Material (1) according to one of the preceding claims, wherein the recesses (5, 5') penetrate one and/or multiple layers 2.

5. Method for manufacturing a material (1) according to one of claims 1 to 4, wherein at least one fibre (3) from the fibre composite is cut through by means of a mechanical action.

6. Method for manufacturing a multi-layer material (1), wherein a first material (1) according to one of claims 1 to 4 is bonded to at least one further material (1) according to one of claims 1 to 4.

7. Method according to claim 5 or 6, wherein the recesses (5, 5') through the material (1) are introduced after the layers (2) are bonded.

8. Method according to one of claims 6 to 7, wherein the recesses (5, 5') are carved out of the multi-layer material (1) with the aid of a laser beam and/or with the aid of ultrasound waves.

9. Multilayer material (1), manufactured by means of a method according to claims 6 to 8.

10. Method for manufacturing a moulded part (11), wherein a material (1) according to one of claims 1 to 4 or a multi-layer material (5), manufactured according to claim 5 or 9, is changed in shape in some areas.

11. Method for manufacturing a moulded part (11) according to claim 10, wherein the distribution of the recesses (5, 5') is selected on the basis of the deformation in the material (1) or in the multi-layer material (1).

12. Method according to claim 11, wherein areas which are significantly deformed contain more recesses (5, 5') than further areas which are minimally deformed.

13. Moulded part (11), manufactured with a method according to one of claims 11 to 12.

14. Housing, in particular a housing of an electric machine, having a moulded part (11) according to claim 13.

## Revendications

1. Matériau (1) ayant au moins une couche (2), dans lequel au moins l'une des couches (2) a un matériau composite fibreux, le matériau composite fibreux ayant des fibres (3) et au moins une fibre (3) étant séparée, **caractérisé en ce que** les plusieurs fibres (3) disposées les unes à côté des autres sont séparées au moyen d'au moins un évidement (5, 5') et **en ce que** l'évidement (5, 5) est prévu pour la séparation (Z), au moins par endroit, d'au moins une couche (3) et **en ce que** la au moins une couche (2) a des régions ayant une densité petite d'évidements (5, 5'), ainsi que d'autres régions ayant une grande densité d'évidements (5, 5').

2. Matériau (1) suivant la revendication 1, dans lequel pour une séparation (Z) des plusieurs fibres (3) disposées les unes à côté des autres, il est prévu un effet mécanique sur les fibres (3).

3. Matériau (1) suivant l'une des revendications précédentes, dans lequel le matériau composite fibreux a des fibres (3) disposées unidirectionnellement.

4. Matériau (1) suivant l'une des revendications précédentes dans lequel les évidements (5, 5') traversent une couche et/ou plusieurs couches.

5. Procédé de fabrication d'un matériau (1) sur l'une des revendications 1 à 4, dans lequel on sépare au moins une fibre (3) du matériau composite fibreux au moyen d'un effet mécanique.

6. Procédé de fabrication d'un matériau (1) à plusieurs couches, dans lequel on relie un premier matériau (1) suivant l'une des revendications 1 à 4 à au moins un autre matériau (1) suivant l'une des revendications 1 à 4.

7. Procédé de fabrication d'un matériau (1) suivant la revendication 5 ou 6, dans lequel on ménage les évidements (5, 5') dans le matériau (1) après la liaison des couches (2).

8. Procédé de fabrication d'un matériau (1) suivant l'une des revendications 6 à 7, dans lequel on ménage les évidements (5, 5') à l'aide d'un faisceau laser et/ou à l'aide d'ondes ultrasonores dans le matériau (1) à plusieurs couches.

9. Matériau (1) à plusieurs couches fabriqué au moyen d'un procédé suivant l'une des revendications 6 à 8.

10. Procédé de fabrication d'une pièce (11) conformée, dans lequel on modifie, par endroit, dans sa forme, un matériau (1) suivant l'une des revendications 1 à 4, ou un matériau (5) à plusieurs couches fabriqué suivant la revendication 5 ou 9.

11. Procédé de fabrication d'une pièce (11) conformée suivant la revendication 10, dans lequel on choisit la répartition des évidements (5, 5') à l'aide de la déformation dans le matériau (1) ou dans le matériau (1) à plusieurs couches.

12. Procédé de fabrication d'un matériau (1) suivant la revendication 11, dans lequel les régions qui sont très déformées reçoivent plus d'évidements (5, 5') que d'autres régions qui sont déformées faiblement.

13. Pièce (11) conformée, fabriquée par un procédé selon l'une des revendications 11 à 12.

14. Enveloppe, notamment enveloppe d'une machine électrique, ayant une pièce (11) conformée suivant la revendication 13.
